# EUROPEAN PATENT SPECIFICATION

(11) **EP 0 420 040 B1**
(45) Date of publication and mention of the grant of the patent: **21.07.1993**
(21) Application number: 90118098.4
(22) Date of filing: 20.09.1990
(51) Int. Cl.: G01P 3/44, G01P 3/487

(54) **Polarized magnetic ring equipped with protecting sleeve for the speed detection of a rotary element**
Mit einer Schutzmanschette versehenes magnetisches Polrad zur Erfassung der Geschwindigkeit eines drehbaren Elements
Anneau polarisé magnétique équipé d'une manche protectrice pour la détection de la vitesse d'un élément rotatif

(30) Priority: 28.09.1989 IT 5338189 U
(43) Date of publication of application: 03.04.1991
(73) Proprietor: RIV-SKF OFFICINE DI VILLAR PEROSA S.p.A, I-10123 Torino (IT)
(72) Inventor: Vignotto, Angelo, I-10100 Torino (IT)
(74) Representative: Lotti, Giorgio

(56) References cited:
- EP-A- 0 213 732
- EP-A- 0 306 850

## Description

The invention refers to a polarized magnetic ring for the rotation speed detection of a rotary element having a protective sleeve.

Polarized magnetic rings are commonly used in devices for detecting the rotation speed of a rotary element such as the wheel of a vehicle.

In this case the polarized magnetic ring is mounted on the rotary ring of the wheel-hub bearing and a suitable sensor is fitted facing axially or radially the magnetic ring for detecting the speed rotation of the wheel and for transferring this datum to special data processors with different functions.

Polarized magnetic rings, however, tend to attract metal particles that are usually present in the surrounding environment, and this may cause some drawbacks for the signal detection and for the operation of the whole device.

Moreover these magnetic rings are commonly fixed, without further restraints, on the bearings outer race of the bearings, so they may move axially because of vibrations, impacts and other brusque movements that the bearing itself can suffer.

It is a purpose of the invention to propose a polarized magnetic ring having a metal sleeve slipped on it that protects it from the metal particles of the surrounding environment and which provides a better restraint on the rotating bearing ring. The metal sleeve according to the invention also improves the orientation of the magnetic flux in the desired direction, which is the one leading to the sensor coupled with the polarized magnetic ring.

A magnetic ring made of synthetic resin in which magnetic material is dispersed is known from Patent No. EP-A-213 732. The magnetic ring, substantially rectangular in cross section, is reinforced by a reinforcing ring member which is made of synthetic resin material. In some embodiments a metallic ring is shown surrounding the magnetic ring for reinforcement.

The invention relates to a polarized magnetic ring for gauging the revolving speed of the rotating outer race of a wheel hub bearing; the ring being fitted on the outer circumferential periphery of the race and having a surface facing a fixed sensor axially; a metallic sleeve being slipped on the outer circumferential surface of the ring gripping it onto the bearing race; characterised in that the magnetic ring has a substantially T shaped cross section so as to abut an edge of the race; the ring having an annular thicker portion on the inner circumferential surface thereof designed to fit a corresponding annular groove obtained in said race; the sleeve covering the outer circumferential surface of said T shaped ring so as to let said surface be the only uncovered portion of the magnetic ring.

The device according to the invention is now going to be described referring to the annexed drawing which represents an axial cross section of the device itself.

According to the invention a metal sleeve 13 is slipped onto ring 12, substantially covering the circumferential lateral surface of said magnetic ring; in this way the only uncovered part of ring 12 is its frontal surface 14 which is facing a sensor (not shown)for detecting the revolving speed of ring 11 and consequently of the wheel of the vehicle.

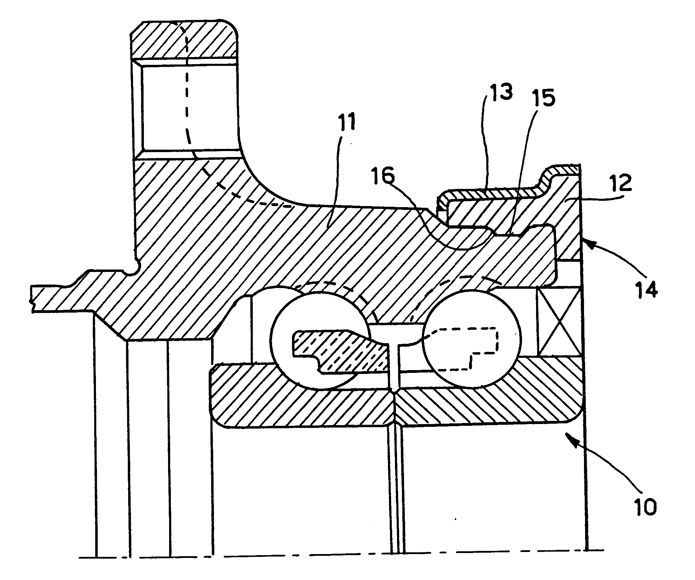

As it is shown in the figure, the metal sleeve protects the magnetic ring 12 from the metallic particles that it would tend to attract radially on its own lateral surface; besides, this metal sleeve allows to restrain the magnetic ring 12 firmly onto the bearing race 11 since it grip it on its surface. It will be understood that the sleeve 13 allows the magnetic flux of the polarized ring 12 to be orientated axially, that is in the direction of the sensor which is facing it and not radially where it would not have any function.

It will also be noticed that with the particular configuration of metallic ring 12 shown in the drawing, that is with a T shape section, the magnetic ring is tightly fixed onto the bearing race 11 to avoid any eventual axial sliding due to vibrations and accidental crashes; this advantageous feature is also provided by the thicker portion 15 of the ring that is located in the groove 16 of ring 11 eliminating completely any risk of axial shifting of the magnetic ring 12 during operation.

## Claims

1. A polarized magnetic ring (12) for gauging the revolving speed of the rotating outer race (11) of a wheel hub bearing; the ring (12) being fitted on the outer circumferential periphery of the race and having a surface (14) facing a fixed sensor axially; a metallic sleeve (13) being slipped on the outer circumferential surface of the ring (12) gripping it onto the bearing race (11); characterised in that the magnetic ring (12) has a substantially T shaped cross section so as to abut an edge of the race (11); the ring (12) having an annular thicker portion (15) on the inner circumferential surface thereof designed to fit a corresponding annular groove (16) obtained in said race (11); the sleeve (13) covering the outer circumferential surface of said T shaped ring (12) so as to let said surface (14) be the only uncovered portion of the magnetic ring (12).

## Patentansprüche

1. Ein polarisierter magnetischer Ring (12) zum Messen der Drehgeschwindigkeit des sich drehenden Außenringes (11) eines Radnabenlagers; der Ring (12) ist dabei auf die äußere Umfangsperipherie des Lagerringes aufgesetzt und besitzt eine Fläche (14), die einem feststehenden Sensor axial gegenübersteht; dabei ist eine metallische Manschette (13) auf die äußere Umfangsfläche des Ringes (12) aufgezogen, welche ihn auf dem Lagerring (11) festspannt; kennzeichnend ist, daß der magnetische Ring (12) einen im wesentlichen T-förmig gestalteten Querschnitt besitzt, so daß er an eine Kante des Lagerringes (11) anstößt; der Ring (12) besitzt auf seiner inneren Umfangsfläche einen ringförmigen dickeren Abschnitt (15), der gestaltet ist, um in eine entsprechende auf dem Lagerring (11) vorgesehene umlaufende Nut (16) zu passen; dabei deckt die Manschette (13) die äußere Umfangsfläche des T-förmig gestalteten Ringes (12) ab, so daß die genannte Fläche (14) als einziger unbedeckter Abschnitt des magnetischen Ringes (12) verbleibt.

## Revendications

1. Anneau magnétique polarisé (12) pour détecter la vitesse de rotation de la bague de roulement extérieure (11) d'un roulement de moyeu de roue ; l'anneau (12) étant monté sur la périphérie circonférentielle extérieure de la bague et présentant une surface (14) qui fait face à un capteur fixe; un manchon métallique (13) étant enfilé sur la surface circonférentielle extérieure de l'anneau (12), le serrant ainsi sur la bague de roulement (11), caractérisé en ce que l'anneau magnétique (12) présente une section sensiblement en forme de T, de manière à venir buter contre un bord de la bague (11) ; l'anneau (12) possédant une partie plus épaisse annulaire (15) sur sa surface circonférentielle intérieure, partie qui est destinée à être reçue dans une rainure annulaire correspondante (16) pratiquée dans la bague (11) ; le manchon (13), recouvrant la surface circonférentielle extérieure de l'anneau en T (12) de telle sorte que ladite surface (14) est la seule partie non recouverte de l'anneau magnétique (12).
